Europäisches Patentamt

European Patent Office

Office européen des brevets

(19)

(11)  **EP 1 703 452 A1**

(12)  **EUROPEAN PATENT APPLICATION**

(43) Date of publication:
**20.09.2006  Bulletin 2006/38**

(51) Int Cl.:
*G06Q 10/00* (2006.01)

(21) Application number: **05102205.1**

(22) Date of filing: **18.03.2005**

| | |
|---|---|
| (84) Designated Contracting States:<br>**AT BE BG CH CY CZ DE DK EE ES FI FR GB GR HU IE IS IT LI LT LU MC NL PL PT RO SE SI SK TR**<br>Designated Extension States:<br>**AL BA HR LV MK YU**<br><br>(71) Applicant: **Research In Motion Limited**<br>**Waterloo, Ontario N2L 3W8 (CA)**<br><br>(72) Inventors:<br>• **Ferryanto, Liem**<br>**Windsor, Ontario N9G 2Y3 (CA)** | • **Barfoot, Patricia Cooper**<br>**waterloo, Ontario N2T 2N4 (CA)**<br>• **Tendler, Benson**<br>**Waterloo, Ontario N2T 1V6 (CA)**<br><br>(74) Representative: **Rickard, David John et al**<br>**26 Mallinson Road**<br>**London SW11 1BP (GB)**<br><br>Remarks:<br>Amended claims in accordance with Rule 86 (2) EPC. |

(54)  **Methods Relating to Reliability in Product Design and Process Engineering**

(57)     A cumulative distribution function (CDF) that represents reliability of a product or process is optimized with respect to one or more critical probabilistic controllable variables of the product or process that it is feasible to control. Optimal mean values for those critical probabilistic controllable variables are determined.

FIG. 1

EP 1 703 452 A1

**Description**

The invention generally relates to designing products and processes for reliability. In particular, embodiments of the invention relate to a method to optimize the reliability of a product or process.

As defined in IEEE Standard Computer Dictionary: A Compilation of IEEE Standard Computer Glossaries (New York, NY: 1990), reliability is the ability of a system or component to perform its required functions under stated conditions for a specified period of time. In today's competitive market, a commitment to product quality and reliability is a necessity. Customers have high expectations for the reliability of the products they buy, and the companies that don't meet those expectations fail. The primary advantages of building reliable products are that reputation improves and costs decrease.

BRIEF DESCRIPTION OF THE DRAWINGS AND APPENDIX

Embodiments of the invention are illustrated by way of example and not limitation in the figures of the accompanying drawings, in which like reference numerals indicate corresponding, analogous or similar elements, and in which:

Figure 1 is a flowchart of a method for improving the reliability of a product or process, according to an embodiment of the invention;

Figure 2A is a schematic illustration of an exemplary engineered model for a general product or process, helpful in understanding embodiments of the invention;

Figure 2B is a schematic illustration of an exemplary engineered model for a ball grid array (BGA) - printed wiring board (PWB) system, helpful in understanding embodiments of the invention;

Figure 3 is a graph of a cumulative distribution function for an exemplary simulated BGA-PWB system, showing the cumulative percentage probability as a function of shear strain;

Figures 4A and 4B are illustrations of an exemplary cumulative distribution function based on a normal distribution, and shifted and squeezed versions thereof, respectively, helpful in understanding embodiments of the invention;

Figures 5A and 5B are mappings of the shear strain range versus $\alpha_{PWB}$, the coefficient of thermal expansion of the PWB;

Figure 6 is a mapping of the shear strain range versus h, the nominal height of the solder joint;

Figure 7 is a mapping of the shear strain range versus L, the nominal diagonal length of the BGA, at two different values of $\Delta T$, the temperature difference between the PWB and the BGA;

Figures 8A, 8B, 8C, 8D and 8E are plots of the shear strain range and the standard deviation of the shear strain range as a function of $L, h, \alpha_{PWB}, \alpha_{BGA}$ (the coefficient of thermal expansion of the BGA), and $\Delta T$, respectively;

Figure 9 shows plots of the shear strain range and the standard deviation of the shear strain range as a function of $L, h, \Delta T, \alpha_{PWB}$ and $\alpha_{BGA}$, with indications of optimal values for these design variables;

Figures 10A and 10B are graphs of a cumulative distribution function as a function of shear strain range in a Setting 1 of non-optimal values and a Setting 2 of optimal values, respectively;

Figures 11A and 11B are graphs of a cumulative distribution function as a function of the number of cycles to failure in a Setting 1 of non-optimal values and a Setting 2 of optimal values, respectively;

Figures 12A and 12B are bar graphs of the percent contribution of design variables to the standard deviation of the shear strain range in Setting 1 and Setting 2, respectively; and

Appendix A is a derivation of equations for functional ANOVA sensitivity analysis.

It will be appreciated that for simplicity and clarity of illustration, elements shown in the figures have not necessarily been drawn to scale. For example, the dimensions of some of the elements may be exaggerated relative to other elements for clarity.

DETAILS

In the following detailed description, numerous specific details are set forth in order to provide a thorough understanding of embodiments of the invention. However it will be understood by those of ordinary skill in the art that the embodiments of the invention may be practiced without these specific details. In other instances, well-known methods, procedures, components and circuits have not been described in detail so as not to obscure the embodiments of the invention.

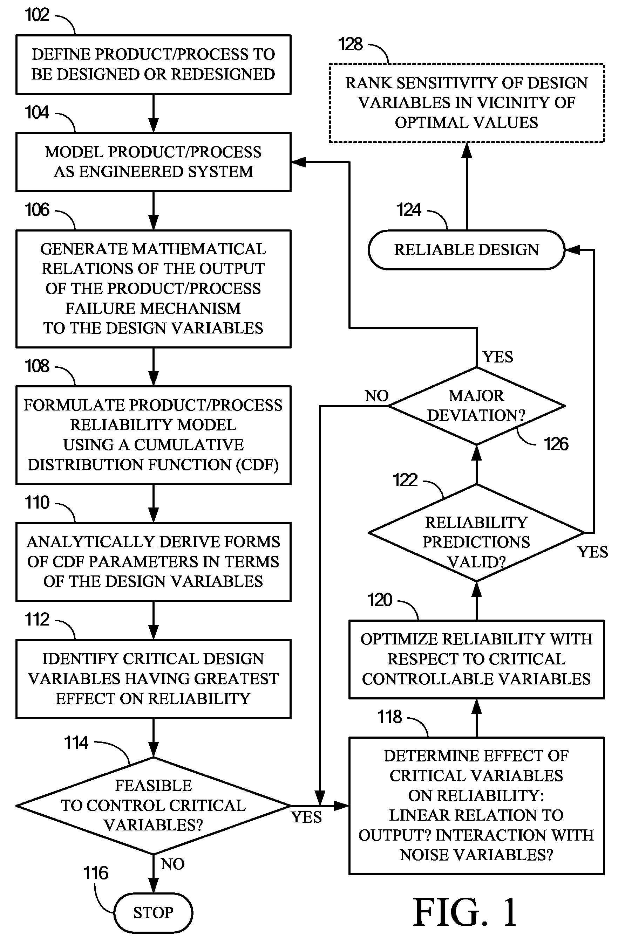

Figure 1 is a flowchart of a method for improving the reliability of a product or process, according to an embodiment of the invention.

At 102, the product or process to be designed or redesigned is defined. The scope of the problem is identified. This may be accomplished using the customer's insight, engineering and manufacturing knowledge, object and process mapping, and other suitable sources of information and techniques.

For example, in ball grid array (BGA) products, a primary failure mechanism is solder joint thermo-mechanical fatigue. The solder connections between the printed wiring board (PWB) and the BGA carrier substrate are stressed in shear by the differences in thermal expansion of the PWB and the BGA carrier substrate. Printed wiring boards are also known as printed circuit boards (PCBs). Changes in temperature induce cyclic strain. Cyclic strain causes an accumulation of damage that results in the development of cracks and eventually fractures. Therefore, for BGA products, the problem identified at 102 in this example is solder fatigue.

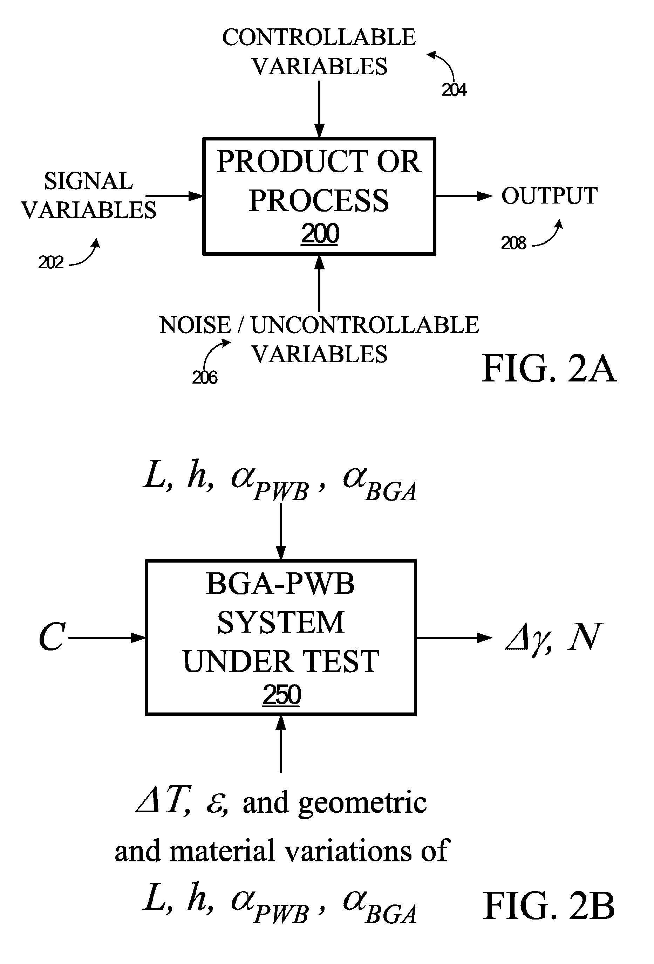

At 104, the product or process to be designed or redesigned is modeled as an engineered system. The model is a system in the physical space that transforms, flows and changes energy, mass and information. The model may be derived based on manufacturing and engineering knowledge. As shown in figure 2A, the model of the product or process 200 involves different *design variables,* which can be categorized, for example, as *signal variables* 202 that drive the outputs, *controllable variables* 204 that can be chosen by a designer of the product or process, and *noise or uncontrollable variables* 206 that cannot be changed by the designer but values of which give variability to the outputs 208. Noise variables may be comprised in the model based on engineering knowledge and/or experimental observations. For example, the observable noise variables may arise from unit-to-unit variation, the internal and/or external operating environment, degradation or duty cycles, or interactions among variables.

For the BGA example above, according to the Engelmaier thermo-mechanical fatigue model, the mean number of cycles to failure, N, is as follows:

$$N = \frac{1}{2}\left(\frac{\Delta\gamma}{2\varepsilon}\right)^{1/C}, \tag{1}$$

where
the mean of the shear strain range is

$$\mu(\Delta\gamma) = \xi\frac{L(\alpha_{PWB} - \alpha_{BGA})\Delta T}{2h}; \tag{2}$$

the fatigue ductility exponent is

$$C = -0.442 - 6\times10^{-4}T_S + 1.7\times10^{-2}\ln\left(1 + \frac{360}{t_D}\right)$$

the fatigue ductility coefficient is $\varepsilon = 0.325$;
$\xi$ is an empirical correction factor (and equals 0.54 for plastic BGA);
$L$ [mm] is the nominal diagonal BGA length;
$h$ [mm] is the nominal height of a solder joint (typically assumed to be the collapsed ball height);
$\alpha_{PWB}$ [ppm/˚C] is the coefficient of thermal expansion of the PWB;
$\alpha_{BGA}$ [ppm/˚C] is the coefficient of thermal expansion of the BGA;
$\Delta T$ [˚C] is the difference in temperature between the BGA and the PWB;
$T_S$ [˚C] is the mean cyclic temperature of the solder; and
$t_D$ is the dwell time.

As illustrated in figure 2B, which is an engineered model for a BGA-PWB system 250, based on the Engelmaier model,
C is a *signal variable* that drives the outputs;
$L, h, \alpha_{PWB}$ and $\alpha_{BGA}$ are *controllable variables* that can be chosen by a designer;
$\Delta T, \varepsilon,$ and geometric and material variations of $L, h, \alpha_{PWB}$ and $\alpha_{BGA}$, are *observable noise variables;* and
$\Delta\gamma$ and *N* are outputs.

At 106, mathematical relations (denoted "transfer functions") between the output of the product or process failure mechanism and the design variables are generated. The product or process need not be a linear, time-invariant system. The transfer functions may be derived from first principles of physics or empirically (for example, from a response surface of hardware or computer experimental designs).

In the BGA example above, the mathematical relations of the design variables C, $L, h, \alpha_{PWB}, \alpha_{BGA}, \Delta T$ and $\varepsilon$ to the outputs $\Delta\gamma$ and *N* are given by the Engelmaier equations above.

At 108, a cumulative distribution function to describe the reliability of the product or process is formulated. The cumulative distribution function may be formulated analytically, or may be determined from simulations of inputs based on the transfer functions generated at 106, or may be generated from historical data, physics, observations, experiments or any combination thereof or any other suitable method.

For example, the transfer functions in the BGA example above provide a mathematical relationship between the inputs and the outputs, namely the range of shear strain and the number of cycles to failure. Simulations of the inputs may be used to calculate the shear strain range and the number of cycles to failure, and to calculate therefrom the cumulative distribution function as a function of shear strain range (or as a function of the number of cycles to failure).

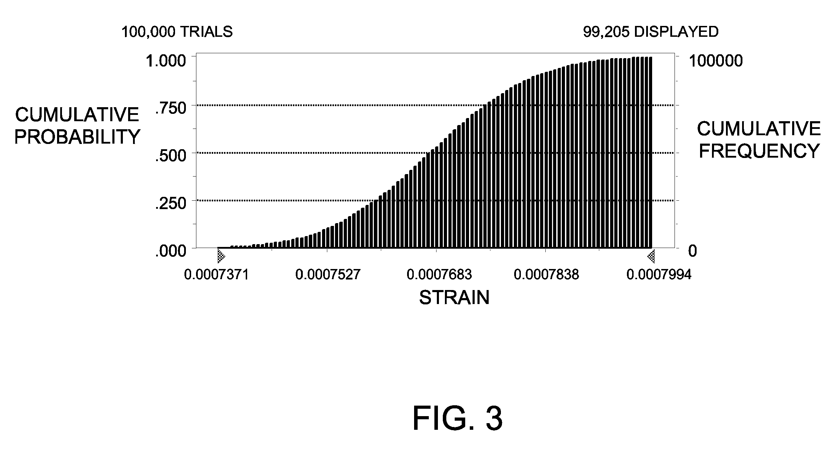

Figure 3 is a graph of a cumulative distribution function (CDF) for an exemplary simulated BGA-PWB system, showing the cumulative percentage probability as a function of shear strain range. For example, according to this graph, the probability that the random variable, shear strain range, is less than or equal to a given value, say 0.00077605, is 0.75. Higher values of shear strain range are related to higher rates of failure, since at higher shear strain range, fewer cycles are required to reach failure. Therefore, intuitively, improving the reliability of the product may be achieved by "shifting" the CDF to the left and/or by "raising" the CDF.

The cumulative distribution function is then formulated in terms of parameters. The parameters will depend upon the distribution that best fits the cumulative distribution function. For example, the parameters of the normal distribution are the mean $\mu$ and the standard deviation $\sigma$, the parameter of the exponential distribution is the rate $\lambda$, the parameters of the two-parameter Weibull distribution are the shape $\beta$ and the scale $\eta$, and the parameters of the lognormal distribution are the shape $\sigma$, the location $\theta$, and the scale $m$. The cumulative distribution function may be more complicated than any of the common distributions.

In the BGA example, the cumulative distribution function may be best fit as a normal distribution, and therefore is formulated as follows:

$$P\left(\Delta\gamma \leq Y\right) = \Phi\left(\frac{Y - \mu\left(\Delta\gamma\right)}{\sigma\left(\Delta\gamma\right)}\right), \tag{4}$$

where P is the cumulative percentage probability that the shear strain range $\Delta\gamma$ is less than or equal to a threshold shear strain range Y. This formulation expresses that the parameters of the function $\Phi$ are the mean $\mu(\Delta\gamma)$ of the shear strain range and the standard distribution $\sigma(\Delta\gamma)$ of the shear strain range.

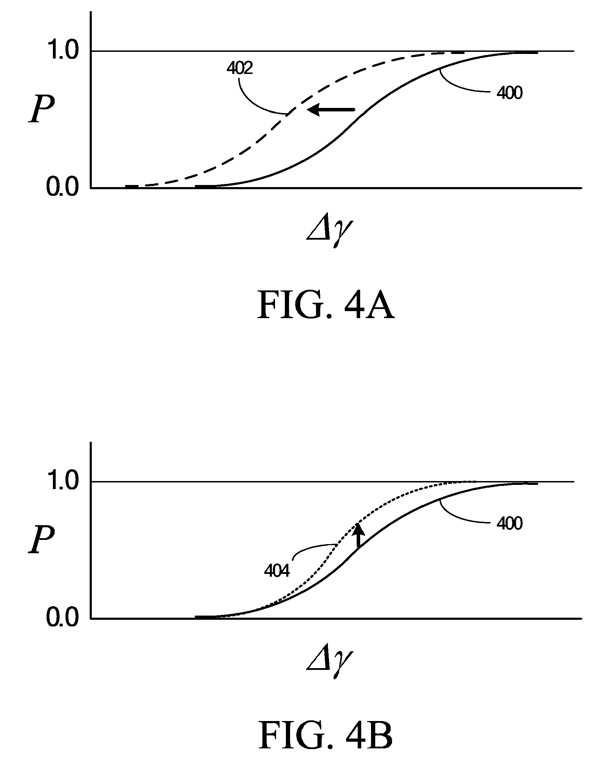

An exemplary cumulative distribution function based on a normal distribution is illustrated in figures 4A and 4B as a solid curve 400. As explained above, improving the reliability of the product or process may be achieved by "shifting" the CDF to the left (in this case, that is equivalent to decreasing the mean $\mu(\Delta\gamma)$), as shown by dashed curve 402 in figure 4A, and/or by "raising" the CDF (in this case, that is equivalent to decreasing the standard distribution $\sigma(\Delta\gamma)$), as shown by dotted curve 404 in figure 4B. However, the range of shear strain $\Delta\gamma$ is an output of the system and is therefore not directly controllable in the design of the product or process.

Accordingly, at 110, the parameters of the cumulative distribution function are expressed in terms of the design variables. The forms of the parameters in terms of the design variables are derived analytically from the transfer functions generated at 106.

In the BGA example above, the parameters of the cumulative distribution function are the mean $\mu(\Delta\gamma)$ and the standard distribution $\sigma(\Delta\gamma)$. The mean $\mu(\Delta\gamma)$ is given in terms of the design variables by Engelmaier equation (2) above. To derive the standard distribution $\sigma(\Delta\gamma)$, an additive noise model is used. Assuming an additive noise model, the location-dispersion or mean-variance model of the objective functions is:

$$R = f\left(W, X, Z\right) + e, \tag{5}$$

where

R denotes the set of outputs, i.e. shear strain range and cycles to failure;

W denotes the set of controllable variables that can be chosen by a designer;

X denotes the signal variables that drive the outputs;

Z denotes the set of observable noise/uncontrollable variables that cannot be changed by a designer, but values of which give variability to the outputs; and

the function $f$ is the deterministic mean that is obtained either from first principles of physics or from a response surface of experimental designs, and $e$ is the random error caused by the uncontrollable noise factors whose expectation and variance are E($e$)=0 and var($e$) = $\sigma^2(W,X,Z)$, respectively.

The variation of R is the variation of e. In many cases, the variation of R is close enough to the variance of the linear approximation of R since the linear approximation of R is around the small area between its mean and variance. Thus, the output mean is the closed loop equation of the output of the engineered model, and the variance can be modeled from a linear approximation of the closed loop equation of the output.

A linear approximation based on the first order Taylor series expansion may be used to estimate the variance of e. The standard deviation of the shear strain range may therefore be written as follows, where the asterisk denotes fixed values of the random variables:

$$\sigma(\Delta\gamma) \approx \frac{\xi}{2} sqrt \left[ \begin{array}{c} \left( \frac{\left(\alpha^*_{PWB} - \alpha^*_{BGA}\right)}{h^*} \Delta T^* \cdot \sigma(L) \right)^2 + \left( \frac{L^*\left(1 - \alpha^*_{BGA}\right)}{h^*} \Delta T^* \cdot \sigma(\alpha_{PWB}) \right)^2 \\ + \left( \frac{L^*\left(\alpha^*_{PWB} - 1\right)}{h^*} \Delta T \cdot \sigma(\alpha_{BGA}) \right)^2 + \left( \frac{L^*\left(\alpha^*_{PWB} - \alpha^*_{BGA}\right)}{h^*} \cdot \sigma(\Delta T) \right)^2 \\ + \left( \frac{L^*\left(\alpha^*_{PWB} - \alpha^*_{BGA}\right)}{h^{*2}} \Delta T \cdot \sigma(h) \right)^2 \end{array} \right] \qquad (6)$$

This approximation of the standard deviation of the shear strain range is just an example, and other analytical formulations relating the standard deviation of the shear strain range to the design variables are possible.

Now that the parameters of the cumulative distribution function have been expressed in terms of the design variables of the system, at 112 those design variables which are critical are identified. A design variable is critical if the reliability of the product or process is sensitive to changes in the design variable. The most sensitive design variables will most likely dictate the optimization of the reliability, which is described in more detail below. Functional Analysis of Variance (ANOVA) sensitivity analysis may be used to identify the critical design variables.

For the BGA example above, functional ANOVA sensitivity analysis may be used, following the teachings in Sobol, I.M., "Global sensitivity indices for non-linear mathematical models and their Monte Carlo estimates", Mathematics and Computers in Simulation, vol. 55, pp. 271-280.

The total effect of a design variable $x_j$ on the total output variability is calculated from the forms of the parameters μ and σ obtained at 110, as derived in detail in Appendix A.

The total effect of $x_j$ to the total output variability is given by

$$TS(j) = 1 - \frac{D_{\sim j}}{D}, \qquad (7)$$

where $D_{\sim j}$ is the sum of variance of all of the $S_{ij...k}$ terms that do not include $x_j$, i.e., the total fractional variance complement to $x_j$. The effective number of design variables, K, for $K \le M$, relative to the product performance, may be determined by applying cut-off criteria such as the following:

$$\sum_{j \in J} TS(j) \ge p \sum_{j=1}^{M} TS(j) \qquad (8)$$

where $0 \le p \le 1$ is the cut-off value and J is a subset of design variables with the largest total sensitivity to the product performance such that the inequality above is satisfied for a given $p$. K is the number of effective or critical design variables in the subset J.

Tables 1 and 2 show the total influence of the design variables and interactions therebetween on the mean μ (Δγ) of the shear strain range and the standard deviation σ(Δγ) of the shear strain range, respectively.

Table 1 - Percentage effect of design variables $x_i$ and interactions on $\mu(\Delta\gamma)$

| $x_i$ | Sum of Squares | $S_i$ % | TS($i$)% | Adj. TS($i$)% | Total Main effect | Total interaction |
|---|---|---|---|---|---|---|
| | | | | | | |
| $L$ | 7.93E-04 | 29.77 | 36.42 | 33.03 | 90.14 | 9.86 |
| $H$ | 7.85E-04 | 29.46 | 36.08 | 32.72 | | |
| $\alpha_{PWB}$ | 5.11E-04 | 19.18 | 23.38 | 21.20 | | |
| $\alpha_{BGA}$ | 3.12E-04 | 11.72 | 14.36 | 13.03 | | |
| $\Delta T$ | 5.00E-07 | 0.02 | 0.03 | 0.02 | | |
| $L \cdot h$ | 8.22E-05 | 3.08 | | | | |
| $L \cdot \alpha_{PWB}$ | 5.35E-05 | 2.01 | | | | |
| $L \cdot \alpha_{BGA}$ | 3.27E-05 | 1.23 | | | | |
| $L \cdot \Delta T$ | 1.00E-07 | 0.00 | | | | |
| $h \cdot \alpha_{PWB}$ | 5.29E-05 | 1.98 | | | | |
| $h \cdot \alpha_{BGA}$ | 3.23E-05 | 1.21 | | | | |
| $h \cdot \Delta T$ | 1.00E-07 | 0.00 | | | | |
| $L \cdot h \cdot \alpha_{PWB}$ | 5.50E-06 | 0.21 | | | | |
| $L \cdot h \cdot \alpha_{BGA}$ | 3.40E-06 | 0.13 | | | | |
| | | | | | | |
| Total | 2.67E-03 | 100.00 | 110.27 | 100.00 | | |

Table 2 - Percentage effect of design variables $x_i$ and interactions on $\sigma(\Delta\gamma)$

| $x_i$ | Sum of Squares | $S_i$ % | TS($i$)% | Adj. TS($i$)% | Total Main effect | Total interaction |
|---|---|---|---|---|---|---|
| | | | | | | |
| $L$ | 338.28 | 21.53 | 28.89 | 25.33 | 87.62 | 11.82 |
| $H$ | 843.81 | 53.69 | 64.84 | 56.85 | | |
| $\alpha_{PWB}$ | 121.80 | 7.75 | 12.19 | 10.69 | | |
| $\alpha_{BGA}$ | 72.96 | 4.64 | 7.55 | 6.62 | | |
| $\Delta T$ | 0.20 | 0.01 | 0.57 | 0.50 | | |
| $L \cdot h$ | 87.70 | 5.58 | | | | |
| $L \cdot \alpha_{PWB}$ | 12.05 | 0.77 | | | | |
| $L \cdot \alpha_{BGA}$ | 7.24 | 0.46 | | | | |
| $h \cdot \alpha_{PWB}$ | 49.02 | 3.12 | | | | |
| $h \cdot \alpha_{BGA}$ | 29.76 | 1.89 | | | | |
| other interactions | 8.71 | 0.55 | | | | |
| | | | | | | |
| Total | 2.67E-03 | 100.00 | 110.27 | 100.00 | | |

The results in Tables 1 and 2 indicate that the controllable variables $L$, $h$, $\alpha_{PWB}$ and $\alpha_{BGA}$ are critical to the mean and standard deviation of the shear strain range, while the uncontrollable variable $\Delta T$ is not critical. Looking at the third column from the right, changes to $L$, h and $\alpha_{PWB}$ will have an effect of approximately 85% on the mean of the shear strain range, and changes to L and h will have an effect of approximately 80% on the standard deviation of the shear strain range. Consequently, design efforts focused on the controllable variables L and h may have the greatest effect on the reliability.

Once the critical variables have been identified at 112, it is checked, at 114, whether it is feasible to control any of those critical variables. For example, it is generally difficult and expensive to control the coefficient of thermal expansion of the PWB. If it is not feasible to control the critical variables, or if none of the critical variables are controllable variables, then the method is stopped at 116, and a different approach may be needed in order to improve the reliability of the product or process.

If however, it is feasible to control at least one of the critical variables, then the method continues at 118, where it is determined what effect changes in each of the critical variables will have on the cumulative distribution function.

In the additive noise model, shifting the CDF is equivalent to minimizing the locations (mean), and raising the CDF is equivalent to squeezing/minimizing the dispersion (standard deviation). Shifting may be achieved by setting values of controllable variables that have a linear relation to the output and that do not have any interaction with noise/uncontrollable variables. Raising may be achieved by setting values of controllable variables that have a nonlinear relation to the output or have interaction with noise/uncontrollable variables. To determine whether the design variables have a linear relation to the output and whether there is an interaction between design variables and noise/uncontrollable variables, calculations may be made using the transfer functions.

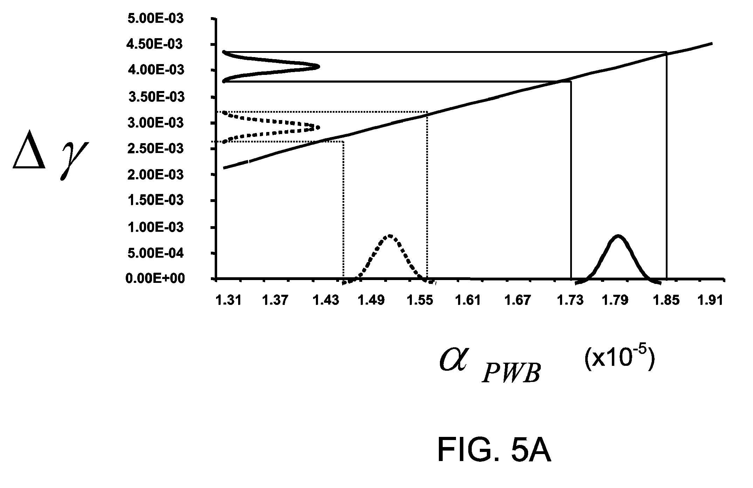

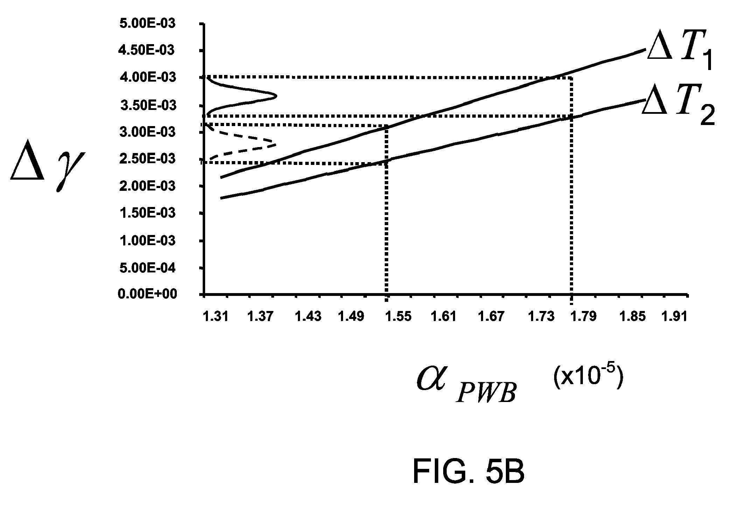

Figure 5A is an exemplary mapping of $\Delta\gamma$ versus $\alpha_{PWB}$ calculated from Engelmaier equation (2) with fixed values for all design variables except $\alpha_{PWB}$. The controllable variable $\alpha_{PWB}$, given values in a first range and a second, higher, range, has a linear relation with the output shear strain range $\Delta\gamma$. Figure 5B is an exemplary mapping of $\Delta\gamma$ versus $\alpha_{PWB}$, calculated from Engelmaier equation (2) with fixed values for all design variables except $\Delta T$ and $\alpha_{PWB}$. Two different values of $\Delta T$ are used in the calculation ($\Delta T_1$ and $\Delta T_2$), as are two different values of $\alpha_{PWB}$. The controllable variable $\alpha_{PWB}$ does not interact with the noise variable $\Delta T$. Increasing the value of $\alpha_{PWB}$, while keeping all other variables fixed, increases the mean of the shear strain range $\mu(\Delta\gamma)$ and has no effect on the standard deviation of the shear strain range $\sigma(\Delta\gamma)$. Consequently, the level of the controllable variable $\alpha_{PWB}$ may be changed to shift the CDF without affecting variability.

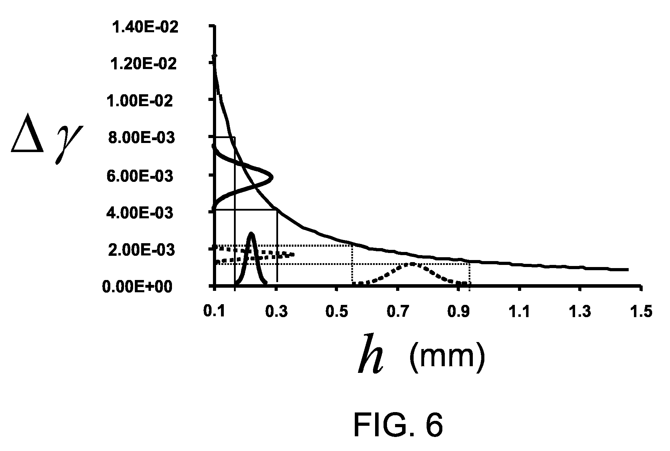

Figure 6 is an exemplary mapping of $\Delta\gamma$ versus h, calculated from Engelmaier equation (2) with fixed values for all design variables except h. The controllable variable h, given values in a first range and a second, higher, range, has a nonlinear relation with the output shear strain range $\Delta\gamma$. The product is more robust at high values of h than at low values of h, when all other variables are fixed.

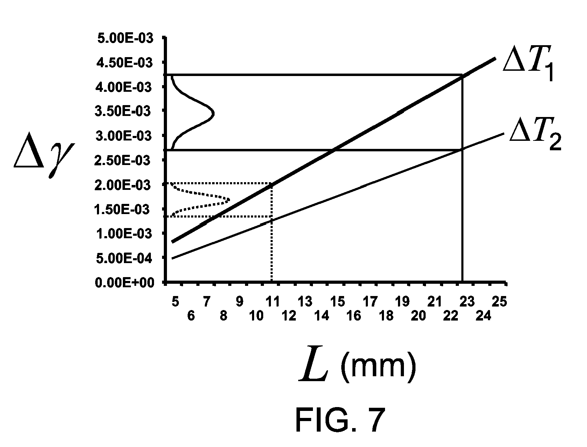

Figure 7 is an exemplary mapping of the $\Delta\gamma$ versus L, calculated from Engelmaier equation (2) with fixed values for all design variables except $\Delta T$ and L. Two different values of $\Delta T$ are used in the calculation ($\Delta T_1$ and $\Delta T_2$), as are two different values of $L$. The controllable variable L has an interaction with the noise variable $\Delta T$. The product is more robust with respect to changes in $\Delta T$ at low values of L than at high values of L, when all other variables are fixed.

Since controllable variable h has a nonlinear relation to the shear strain range $\Delta\gamma$ and controllable variable L interacts with the noise variable $\Delta T$, the nominal value of the variables h and L may have a major effect on the variability of the shear strain range. Changing the levels of these controllable variables may desensitize the response of the shear strain range to variability in the controllable variables. The levels of these controllable variables may be set to raise the CDF and make the product more robust. For example, as shown in figure 6, the variability of *h* is greater at higher values of *h* than at lower values of *h,* yet the variability in the shear strain range is lower at higher values of *h* than at lower values of h.

At 120, the optimization of the reliability is performed with respect to one or more of the critical controllable variables. If all of the controllable variables have linear relations with the output and no interactions with the noise variables, then only shifting of the CDF is possible, and a single-objective optimization is performed. Otherwise, shifting and raising the CDF are possible, and a multiple-objective optimization is performed.

There are several different approaches to optimization. Both a graphical approach and a desirability-function approach are described below.

For the BGA example above, an experimental simulation was performed as follows. The values of the controllable variables *L, h,* $\alpha_{PWB}$ and $\alpha_{BGA}$, and of the noise variable $\Delta T$ were varied, while the standard deviation of these variables was fixed. The values used in the simulation were as follows:

| Controllable Variables | Minimum Value | Intermediate Value | Maximum Value |
|---|---|---|---|
| $L$ [mm] | 10.9 | 16.2 | 24.4 |
| $h$ [mm] | 0.38 | 0.567 | 0.85 |
| $\alpha_{PWB}$ [ppm/°C] | 13.1 | 14.5 | 18.1 |
| $\alpha_{BGA}$ [ppm/°C] | 5 | 7.50 | 9.00 |

| Noise Variables | Fixed value |
|---|---|
| $\sigma(L)$ [mm] | 0.0265 |
| $\sigma(h)$ [mm] | 0.0052 |
| $\sigma(\alpha_{PWB})$ [ppm/°C] | 0.0072 |
| $\sigma(\alpha_{BGA})$ [ppm/°C] | 0.0022 |

where the standard deviation values were derived from Evans, J.W. et al., "Simulation of Fatigue Distributions for Ball Grid Arrays by the Monte Carlo Method", Microelectronics Reliability, vol. 40, no. 7, August 2000, pp. 1147-1155. The difference in temperature $\Delta T$ between the PWB and BGA was set to 39.6 °C, 40.0 °C, and 40.0 °C, and the empirical correction factor $\xi$ was set to 0.54.

The results of the simulation included the following:

| Run # | $L$ [mm] | $h$ [mm] | $\alpha_{PWB}$ [ppm/°C] | $\alpha_{BGA}$ [ppm/°C] | $\Delta T$ [°C] | $\mu(\Delta\gamma)$ | $\sigma(\Delta\gamma)$ |
|---|---|---|---|---|---|---|---|
| 1 | 10.9 | 0.380 | 13.1 | 5.0 | 39.6 | 2.48E-03 | 3.53E-05 |
| 2 | 10.9 | 0.380 | 13.1 | 5.0 | 40.0 | 2.51E-03 | 3.56E-05 |
| 3 | 10.9 | 0.380 | 13.1 | 5.0 | 40.4 | 2.53E-03 | 3.60E-05 |
| 119 | 16.2 | 0.567 | 14.5 | 7.5 | 39.6 | 2.14E-03 | 2.12E-05 |
| 120 | 16.2 | 0.567 | 14.5 | 7.5 | 40.0 | 2.16E-03 | 2.14E-05 |
| 121 | 16.2 | 0.567 | 14.5 | 7.5 | 40.4 | 2.18E-03 | 2.16E-05 |
| 241 | 24.4 | 0.850 | 18.1 | 9.0 | 39.6 | 2.79E-03 | 1.88E-05 |
| 242 | 24.4 | 0.850 | 18.1 | 9.0 | 40.0 | 2.82E-03 | 1.90E-05 |
| 243 | 24.2 | 0.850 | 18.1 | 9.0 | 40.4 | 2.85E-03 | 1.92E-05 |

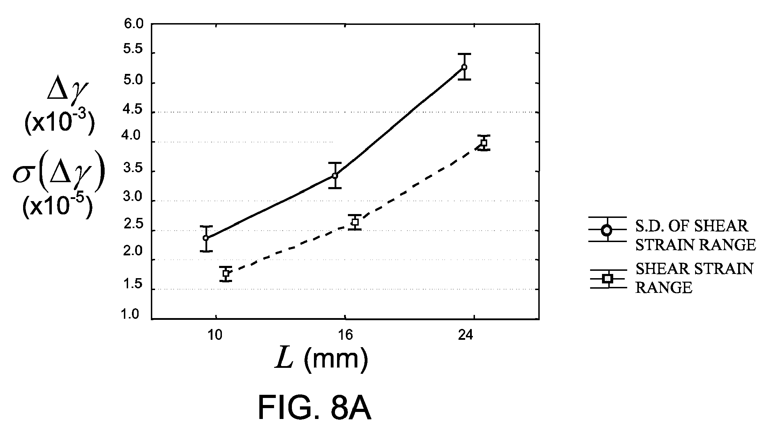

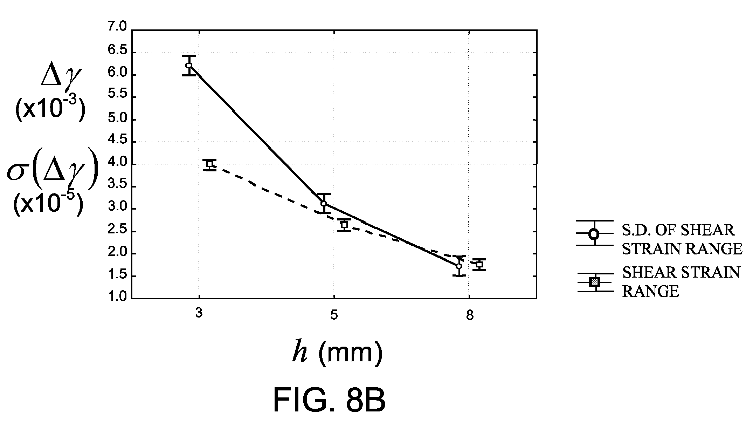

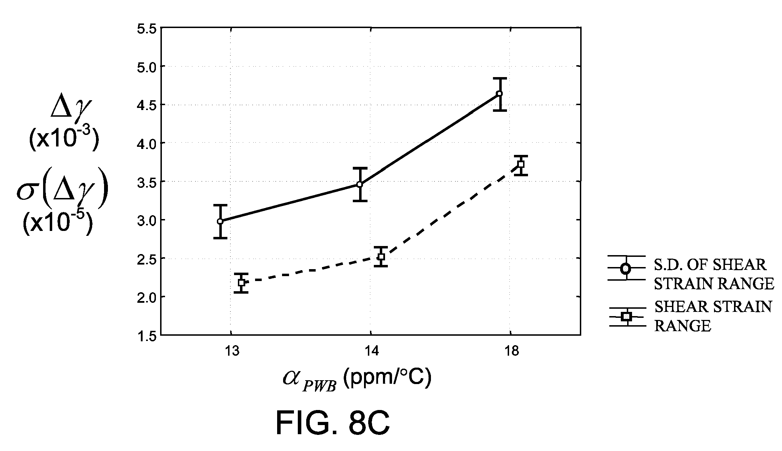

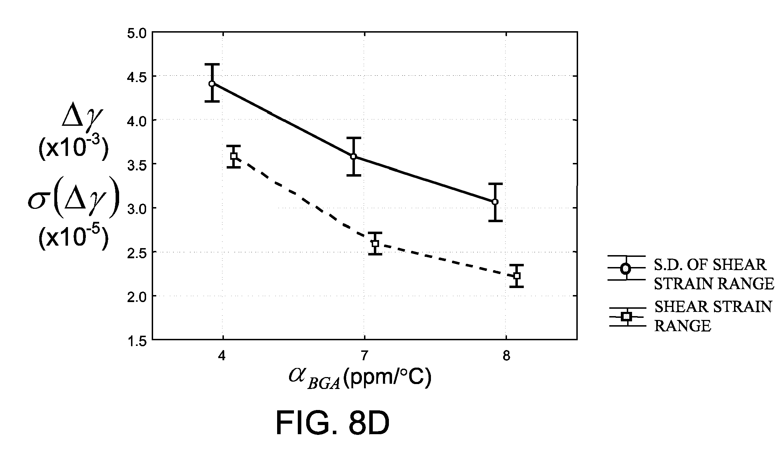

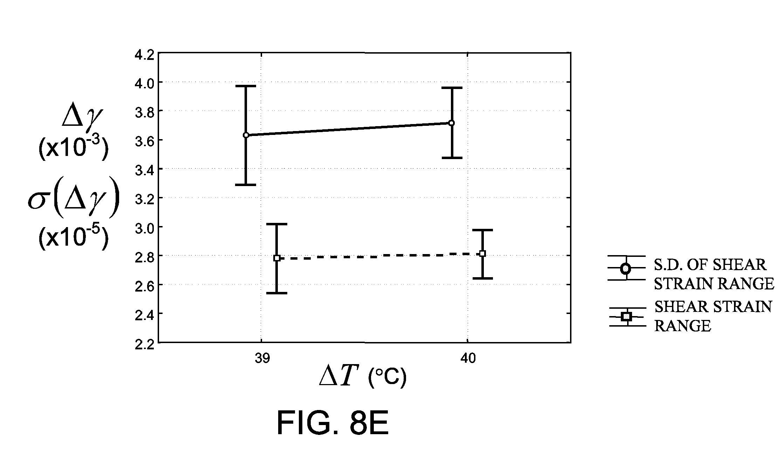

The results of the experimental simulation may also be viewed graphically. Figures 8A, 8B, 8C, 8D and 8E are plots of $\mu(\Delta g)$ (solid line) and $\sigma(\Delta\gamma)$ (dashed line) as a function of $L$, $h$, $\alpha_{PWB}$, $\alpha_{BGA}$, and $\Delta T$, respectively. In this example, changes of the variable values result in changes in $\mu(\Delta\gamma)$ and $\sigma(\Delta\gamma)$, but the changes are in the same direction. Therefore, to minimize $\mu(\Delta\gamma)$ and $\sigma(\Delta\gamma)$, one should minimize L, maximize h, minimize $\alpha_{PWB}$ and maximize $\alpha_{BGA}$. If, however, changes in a design variable were to cause opposite changes in $\mu(\Delta\gamma)$ and $\sigma(\Delta\gamma)$, then one would need to trade-off the minimization of $\mu(\Delta\gamma)$ and $\sigma(\Delta\gamma)$ with respect to that design variable.

Plots of $\mu(\Delta\gamma)$ as a function of h and L, $\alpha_{PWB}$ and L, $\alpha_{PWB}$ and $h$, $\alpha_{BGA}$ and L, $\alpha_{BGA}$ and $h$, and $\alpha_{PWB}$ and $\alpha_{BGA}$, although not shown here, demonstrate that there are no significant effects on $\mu(\Delta\gamma)$ due to interactions between the tested variables. Consequently, using the graphical approach, the optimal solution with respect to the critical controllable variables $L$, $h$, $\alpha_{PWB}$ and $\alpha_{BGA}$ is L = 10.9 mm, $h$ = 0.85 mm, $\alpha_{PWB}$ = 13.1 ppm/°C and $\alpha_{BGA}$ = 9.0 ppm/°C.

An exemplary desirability-function approach to optimizing the reliability is as follows. The multiple objectives of the optimization are to minimize $\mu(\Delta\gamma)$ and $\sigma(\Delta\gamma)$, subject to the following constraints:

10.90 mm = $L_{MIN} \le \hat{L} \le L_{MAX}$ = 24.40 mm;

$0.38 \text{ mm} = h_{MIN} \leq \hat{h} \leq h_{MAX} = 0.85 \text{ mm};$

$13.1 \text{ppm/}^{\circ}\text{C} = \alpha_{PWB\,MIN} \leq \hat{\alpha}_{PWB} \leq \alpha_{PWB\,MAX} = 18.1 \text{ppm/}^{\circ}\text{C};$

$4.96 \text{ ppm/}^{\circ}\text{C} = \alpha_{BGA\,MIN} \leq \hat{\alpha}_{BGA} \leq \alpha_{BGA\,MAX} = 8.95 \text{ppm/}^{\circ}\text{C; and}$

$39.6^{\circ}\text{C} = \Delta T_{MIN} \leq \Delta \hat{T} \leq \Delta T_{MAX} = 40.4^{\circ}\text{C},$

where the caret denotes the value of the design variable that optimizes the reliability.

Since the scale of the responses $\mu(\Delta\gamma)$ and $\sigma(\Delta\gamma)$ differ, a normalized individual desirability $d_i$ factor is defined for each response, as follows:

$$d_i = \begin{cases} 1, & \text{if } y_i \leq y_i^{\text{min\_target}} \\ \left[ \dfrac{y_i^{\text{max\_target}} - y_i}{y_i^{\text{max\_target}} - y_i^{\text{min\_target}}} \right]^V, & \text{if } y_i^{\text{min\_target}} \leq y_i \leq y_i^{\text{max\_target}} \\ 0, & \text{if } y_i \geq y_i^{\text{max\_target}} \end{cases} \qquad (9)$$

where $y_i$ represents values of $\mu(\Delta\gamma)$ and $\sigma(\Delta\gamma)$, $y_i^{\text{max\_target}}$ and $y_i^{\text{min\_target}}$ are upper and lower target values of the response, and V is an exponential shape parameter. For example, it may be determined that the target values of $\mu(\Delta\gamma)$ are between $2.4 \times 10^{-3}$ and $2.6 \times 10^{-3}$. Therefore, the normalized individual desirability $d_i$ factor for $\mu(\Delta\gamma)$ will have a value of 1 if $\mu(\Delta\gamma) \leq 2.4 \times 10^{-3}$, a value of 0 if $\mu(\Delta\gamma) \geq 2.6 \times 10^{-3}$, and a value between 0 and 1 according to the formula above if $\mu(\Delta\gamma)$ is between $2.4 \times 10^{-3}$ and $2.6 \times 10^{-3}$. Similarly, upper and lower target values may be determined for $\sigma(\Delta\gamma)$.

Weighted geometric mean aggregate methods may be used to combine the normalized individual desirability factors into a combined desirability D. For example, D may be defined as follows:

$$D = \left( d_1^{w_1} \times d_2^{w_2} \times \cdots \times d_n^{w_n} \right)^{1/\sum_{i=1}^{n} w_i} \qquad (10)$$

where n is the total number of responses ($n = 2$ in this example) and $w_i$ is the weight of normalized individual desirability $d_i$. Optimizing the multiple responses is equivalent to maximizing the combined desirability D.

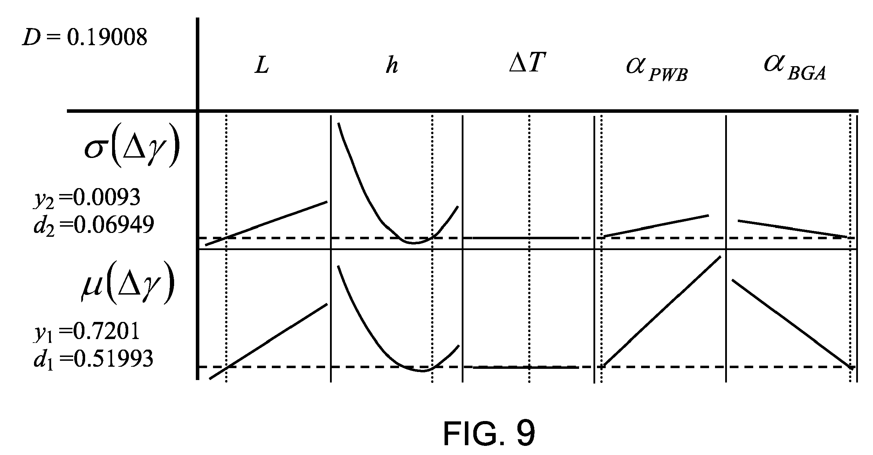

A calculation of the optimal combined desirability D was performed (with weights of 1) and resulted in an optimal desirability D = 0.19008, with normalized individual desirabilities of $d_1$ = 0.51993 for $\mu(\Delta\gamma)$ and $d_2$ = 0.06949 for $\sigma(\Delta\gamma)$. The results of the calculation are plotted in figure 9. The solid lines and curves are plots of $\mu(\Delta\gamma)$ and $\sigma(\Delta\gamma)$ as a function of each of the design variables $L$, $h$, $\Delta T$, $\alpha_{PWB}$ and $\alpha_{BGA}$. The horizontal dashed lines mark the optimal response value $y_1 = 10^3 \times \mu(\Delta\gamma) = 0.7201$ and the optimal response value $y_2 = 10^3 \times \sigma(\Delta\gamma) = 0.0093$. The vertical dotted lines mark the optimal values of the controllable variables according to the desirability-function approach: L = 13.0 mm, $\hat{h}$ = 0.75 mm, $\hat{\alpha}_{PWB}$ = 13.1 ppm/$^{\circ}$C and $\hat{\alpha}_{BGA}$ = 8.9 ppm/$^{\circ}$C, and indicate that this optimal desirability D occurs at $\Delta T$ = 40.0 $^{\circ}$C, although $\Delta T$ is an uncontrollable noise variable.

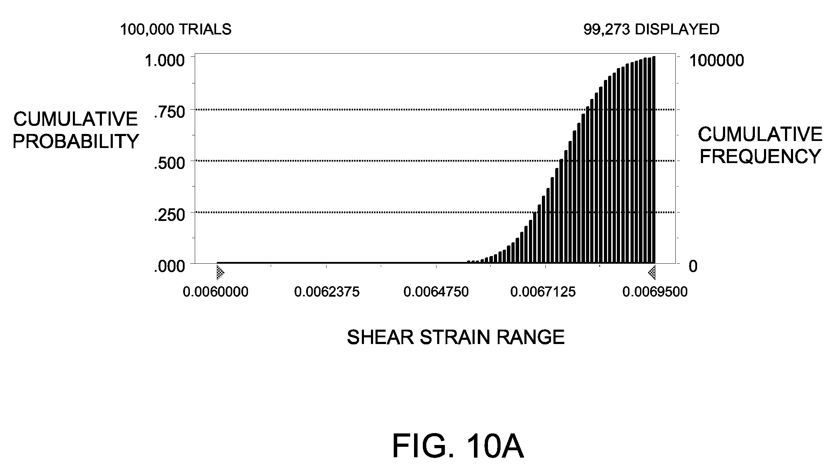

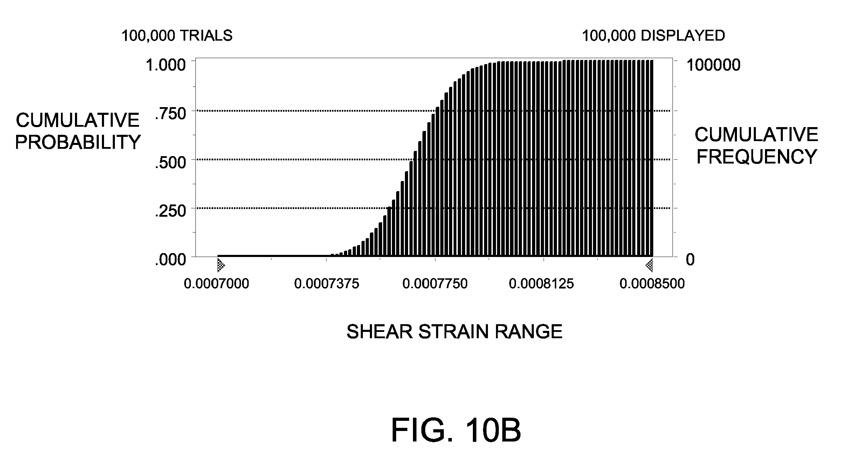

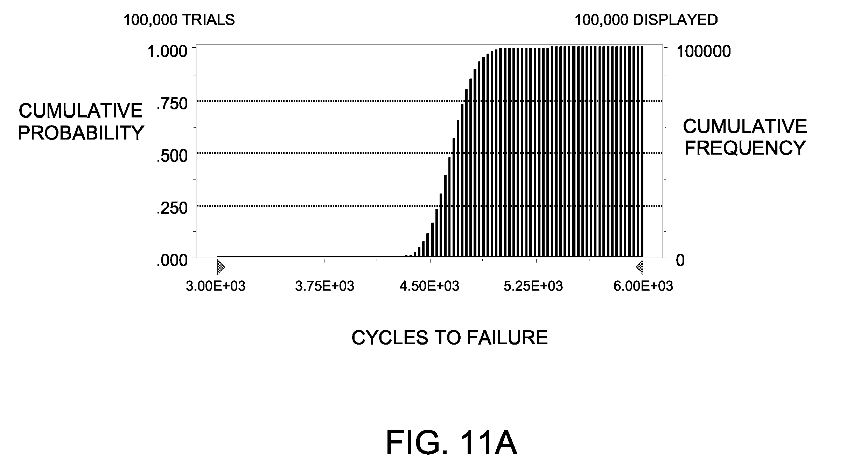

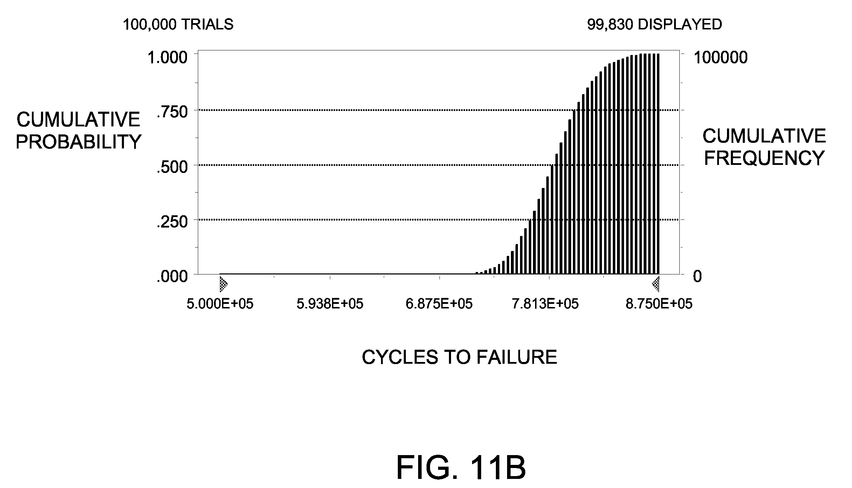

Figures 10A, 10B, 11A and 11B show comparisons of a "Setting 1" of non-optimal values and a "Setting 2" of optimal values for the controllable variables resulting from the desirability calculation above.

| Variables | Mean Values | |
|---|---|---|
| | *Setting 1* | *Setting 2* |
| $L$ [mm] | 16.2 | 13 |

(continued)

| Variables | Mean Values | |
|---|---|---|
| | *Setting 1* | *Setting 2* |
| $h$ [mm] | 0.56 | 0.75 |
| $\alpha_{PWB}$ [ppm/˚C] | 14.5 | 13.1 |
| $\alpha_{BGA}$ [ppm/˚C] | 7.5 | 8.9 |
| $\Delta T$ [˚C] | 40 | 40 |

Figures 10A and 10B are graphs of a cumulative distribution function as a function of shear strain range in Setting 1 and Setting 2, respectively. The CDF of figure 10B has a significantly lower mean and a smaller dispersion than those of the CDF of figure 10A. So the CDF of figure 10B is "shifted" to the left and "raised" relative to the CDF of figure 10A. Since higher values of shear strain range are related to higher rates of failure, the optimal values of Setting 2 represent an improvement in reliability relative to the non-optimal values of Setting 1.

Figures 11A and 11B are graphs of a cumulative distribution function as a function of the number of cycles to failure for the non-optimal values and the optimal values, respectively. The CDF of figure 11B has a significantly higher mean and a higher dispersion than those of the CDF of figure 11A. So the CDF of figure 11B is "shifted" to the right and "lowered" relative to the CDF of figure 11A. Since higher numbers of cycles to failure are related to lower rates of failure, the optimal values represent an improvement in reliability relative to the non-optimal values.

Using the formulation of the reliability in terms of the CDF (performed at 108), reliability predictions for Setting 1 (non-optimal values) and Setting 2 (optimal values) may be compared. The results for the BGA example above were as follows:

| Setting 1 | | | Setting 2 | | |
|---|---|---|---|---|---|
| Y | $P(\Delta\gamma \leq Y)$ | Cycles-to-failure | Y | $P(\Delta\gamma \leq Y)$ | Cycles-to-failure |
| 2.22E-03 | 0.01 | 6.402E+04 | 8.14E-04 | 0.01 | 6.855E+05 |
| 2.20E-03 | 0.05 | 6.529E+04 | 8.06E-04 | 0.05 | 7.016E+05 |
| 2.19E-03 | 0.10 | 6.598E+04 | 8.01E-04 | 0.10 | 7.105E+05 |
| 2.18E-03 | 0.20 | 6.682E+04 | 7.96E-04 | 0.20 | 7.214E+05 |
| 2.17E-03 | 0.30 | 6.744E+04 | 7.92E-04 | 0.30 | 7.295E+05 |
| 2.17E-03 | 0.40 | 6.798E+04 | 7.89E-04 | 0.40 | 7.364E+05 |
| 2.16E-03 | 0.50 | 6.849E+04 | 7.86E-04 | 0.50 | 7.430E+05 |
| 2.15E-03 | 0.60 | 6.900E+04 | 7.83E-04 | 0.60 | 7.497E+05 |
| 2.15E-03 | 0.70 | 6.956E+04 | 7.80E-04 | 0.70 | 7.570E+05 |
| 2.14E-03 | 0.80 | 7.022E+04 | 7.76E-04 | 0.80 | 7.656E+05 |
| 2.13E-03 | 0.90 | 7.114E+04 | 7.71E-04 | 0.90 | 7.777E+05 |
| 2.12E-03 | 0.95 | 7.192E+04 | 7.67E-04 | 0.95 | 7.880E+05 |
| 2.10E-03 | 0.99 | 7.342E+04 | 7.59E-04 | 0.99 | 8.078E+05 |

With the design variables at non-optimal Setting 1, the mean shear strain range is $\mu(\Delta\gamma)$=2.16E-03, the standard deviation of the shear strain range is $\sigma(\Delta\gamma)$=2.69E-05, and the probability of a product to have:

shear strain range > 2.10E-03 or cycles-to-failure > 73,420 is 99%

shear strain range > 2.16E-03 or cycles-to-failure > 68,490 is 50%

shear strain range > 2.20E-03 or cycles-to-failure > 65,290 is 5%

shear strain range > 2.22E-03 or cycles-to-failure > 64,020 is 1%

With the design variables at optimal Setting 2, the mean shear strain range is $\mu(\Delta\gamma)$=7.68E-04, the standard deviation of the shear strain range is $\sigma(\Delta\gamma)$=1.18E-05, and the probability of a product to have:

shear strain range > 7.59E-04 or cycles-to-failure > 807,800 is 99%

shear strain range > 7.86E-04 or cycles-to-failure > 743,000 is 50%

shear strain range > 8.06E-04 or cycles-to-failure > 701,600 is 5%

shear strain range > 8.14E-04 or cycles-to-failure > 685,500 is 1%

$\mu(\Delta\gamma)$ and $\sigma(\Delta\gamma)$ of Setting 2 are approximately 2.29 times and 2.75 times smaller than those of Setting 1, respectively. An improvement of close to 3 times in the mean and standard deviation of the shear strain range yields improvements of more than 10 times in the cycles-to-failure of the product.

At 122, the design involving the optimal values for the critical controllable variables calculated at 120 is validated with hardware implementations. If the analytical findings are in line with the physical tests, then the design is reliable, as at 124. If the hardware implementations deviate from what the analytical findings predicted, then if the deviation is major (checked at 126), the modeling of the product or process at 104 may need to be revised. If the deviation is minor, then the optimization effort at 118 and 129 may need to be revised so that more appropriate settings for the design variables are chosen. A test may be performed through the inverse of the cumulative distribution function at the tail or critical area. For example, a test may be done for the probability of failures at 1% with a much smaller number of samples.

While the optimal values for the critical controllable variables are calculated at 120, that calculation does not quantify the effect of variations in those variables from the optimal values on the reliability. At 128, the sensitivity of the reliability to the uncontrollable variables (e.g. $\Delta T$) and to variations of the critical controllable variables (e.g. *L, h,* $\alpha_{PWB}$ and $\alpha_{BGA}$) in the vicinity of their optimal values may optionally be determined. For example, this sensitivity may be determined via local probabilistic sensitivity analysis based on root sum of squares techniques, or tolerance design-based functional ANOVA analysis.

For the BGA example above, the standard deviation $\sigma(\Delta\gamma)$ of the shear strain range around the mean $\mu(\hat{x}_1)$,..., $\mu(\hat{x}_5)$ (where $x_1$,...,$x_5$ are the variables L, h, $\Delta T$, $\alpha_{PWB}$ and $\alpha_{BGA}$) based on the first-order Taylor series expansion is known as the Root Sum of Squares (RSS) formula:

$$\sigma(\Delta\gamma) = \sqrt{\sum_{i=1}^{M}\left(\left.\frac{\partial f(\mathrm{x})}{\partial x_i}\right|_{\mathrm{x}=\mu(\hat{x}_1),\cdots,\mu(\hat{x}_5)}\sigma(x_i)\right)^2} \quad . \tag{11}$$

The local probabilistic sensitivity, importance, influence or contribution of $x_i$ around $\mu(\hat{x}_1)$,...,$\mu(\hat{x}_5)$ is as follows:

$$S(x_i) = \frac{\left(\left.\dfrac{\partial f(\mathrm{x})}{\partial x_i}\right|_{\mathrm{x}=\mu(\hat{x}_1),\cdots,\mu(\hat{x}_5)}\sigma(x_i)\right)^2}{\sigma^2(\Delta\gamma)} \quad . \tag{12}$$

This is the influence of a certain variable $x_i$ on a certain design setting (fixed variable values and tolerances). "Probabilistic" sensitivity has two components:

a) Sensitivity of the performance function to the variable, $\dfrac{\partial f(\mathrm{x})}{\partial x_i}$ .. $f$ is a generic function for the response, which in the BGA example above is the shear strain range and the standard deviation of the shear strain range. It is the slope of the function at the point of interest (for example, the mean value) with respect to variable $x_i$.

b) Variability of the variable: $\sigma^2(x_i)$, for example, spread or dispersion that may be due to unit-to-unit variation, degradation, and/or other factors.

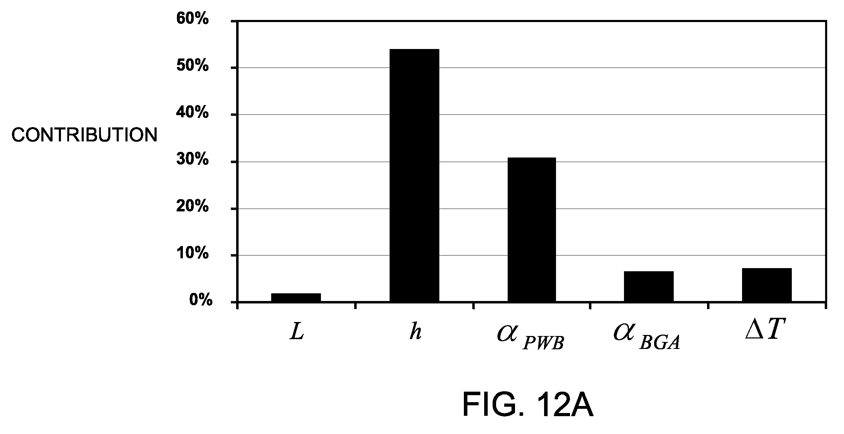

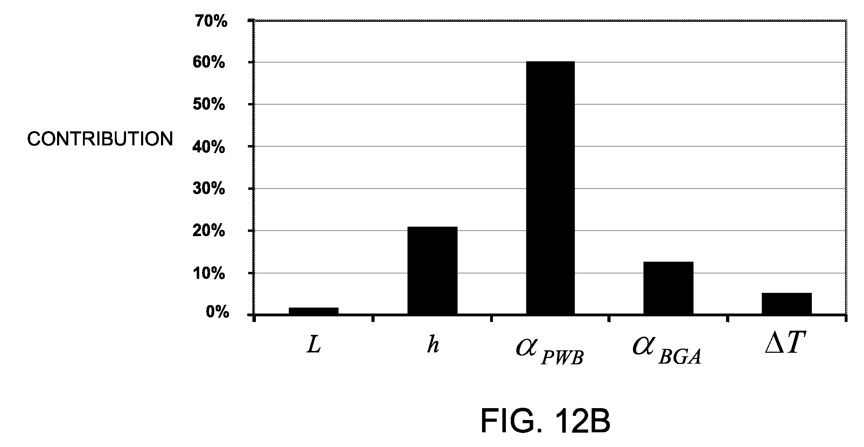

Figures 12A and 12B are bar graphs of the percent contribution of design variables to the standard deviation $\sigma(\Delta\gamma)$ in Setting 1 and Setting 2, respectively. The plots show that h and $\alpha_{PWB}$ are critical variables. Quality assurance may be focused on these factors when inspecting products. Manufacturers may focus on these factors when planning the facility and tooling.

Another way to rank the sensitivity of the design variables is to apply functional ANOVA to simulations in which the design variables have fixed values and the tolerance of the design variables changes. The values used in the simulation were as follows:

| Variables | Mean Values | | Standard Deviation | | | | |
|---|---|---|---|---|---|---|---|
| | Set. 1 | Set. 2 | B-50%B | B-25%B | Baseline (B) | B+50%B | B+100%B |
| $L$ [mm] | 16.2 | 13 | 1.33E-02 | 1.99E-02 | 2.65E-02 | 3.98E-02 | 5.30E-02 |
| $h$ [mm] | 0.56 | 0.75 | 2.60E-03 | 3.90E-03 | 5.20E-03 | 7.80E-03 | 1.04E-02 |
| $\alpha_{PWB}$ [ppm/˚C] | 14.5 | 13 | 2.42E-08 | 3.62E-08 | 4.83E-08 | 7.25E-08 | 9.66E-08 |
| $\alpha_{BGA}$ [ppm/˚C] | 7.5 | 8.9 | 1.11E-08 | 1.67E-08 | 2.22E-08 | 3.33E-08 | 4.44E-08 |
| $\Delta T$ [˚C] | 40 | 40 | 6.50E-02 | 9.75E-02 | 1.30E-01 | 1.95E-01 | 2.60E-01 |

Tables 3 and 4 show the sensitivity of the design variables and interactions there between for Setting 1 and 2, respectively, where all the standard deviation numbers have been multiplied by $10^5$.

Table 3 - Percentage effect of tolerance of design variables $x_i$ and interactions on $\sigma(\Delta\gamma)$

| Setting 1 | Sum of Squares | $S_i$ % | TS($i$)% | Adj. TS($i$)% | Total Main effect | Total interaction |
|---|---|---|---|---|---|---|
| $\sigma(L)$ | 2.28 | 0.09 | 0.40 | 0.40 | 98.64 | 1.36 |
| $\sigma(h)$ | 1888.62 | 70.53 | 71.90 | 71.25 | | |
| $\sigma(\alpha_{PWB})$ | 677.73 | 25.31 | 26.67 | 26.43 | | |
| $\sigma(\alpha_{BGA})$ | 34.67 | 1.29 | 1.61 | 1.60 | | |
| $\sigma(\Delta T)$ | 37.81 | 1.41 | 0.32 | 0.32 | | |
| $\sigma(h)\cdot\sigma(\alpha_{PWB})$ | 27.97 | 1.04 | | | | |
| Other interactions | 8.52 | 0.32 | | | | |
| Total | 2677.6 | 100.00 | 100.91 | 100.00 | | |

Table 4 - Percentage effect of tolerance of design variables $x_i$ and interactions on $\sigma(\Delta\gamma)$

| Setting 2 | Sum of Squares | $S_i$ % | TS($i$)% | Adj. TS($i$)% | Total Main effect | Total interaction |
|---|---|---|---|---|---|---|
| $\sigma(L)$ | 0.585 | 0.11 | 0.91 | 0.89 | 98.59 | 1.41 |
| $\sigma(h)$ | 61.511 | 11.67 | 13.08 | 12.67 | | |
| $\sigma(\alpha_{PWB})$ | 429.709 | 81.52 | 82.93 | 80.37 | | |
| $\sigma(\alpha_{BGA})$ | 24.549 | 4.66 | 5.46 | 5.29 | | |
| $\sigma(\Delta T)$ | 3.346 | 0.63 | 0.80 | 0.78 | | |
| $\sigma(h). \sigma(\alpha_{PWB})$ | 3.174 | 0.60 | | | | |

(continued)

| Setting 2 | Sum of Squares | $S_i$ % | TS($i$)% | Adj. TS($i$)% | Total Main effect | Total interaction |
|---|---|---|---|---|---|---|
| Other interactions | 4.237 | 0.80 | | | | |
| Total | 527.111 | 100.00 | 103.18 | 100.00 | | |

The results in Tables 3 and 4 indicate that the tolerances of the controllable variables h and $\alpha_{PWB}$ are critical (>90% influence). The tolerance of the shear strain range $\sigma(\Delta\gamma)$ is sensitive to changes in the tolerances of $h$ and $\alpha_{PWB}$.

While the BGA example above demonstrates how to apply the methodology of embodiments of the invention to a product, the embodiments are equally applicable to a process that is being designed or redesigned.

For example, it may be beneficial to improve the performance of a process involving a trim press machine. The process may be modeled as having controllable variables including, for example, head size, press time, pressure, with or without a glove, different procedures to place the trim, and uncontrollable variables including, for example, the adhesive content of the material, the surface of the device to be pressed, and the like, and noise variables including, for example, humidity and temperature. The transfer function of the press performance may be derived from a design of experiments (DOE). The rest of the methodology of figure 1, as described above, may be applied to the process.

While certain features of the invention have been illustrated and described herein, many modifications, substitutions, changes, and equivalents will now occur to those of ordinary skill in the art. It is, therefore, to be understood that the claims that follow Appendix A are intended to cover all such modifications and changes as fall within the spirit of the invention.

## APPENDIX A

### Functional ANOVA Sensitivity Analysis

The following derivation is based on the teachings in Sobol, I.M., "Global sensitivity indices for non-linear mathematical models and their Monte Carlo estimates", *Mathematics and Computers in Simulation*, vol. 55, pp. 271-280.

The forms of the parameters $\mu$ and $\sigma$ obtained at 110 may be decomposed into independent (orthogonal) functions of increasing dimensionality:

$$f(x_1, x_2, \ldots, x_M) = f_0 + \sum_{i=1}^{M} f_i(x_i) + \sum_{1 \le i < j \le M} f_{ij}(x_i, x_j) + \cdots + f_{12\cdots M}(x_1, x_2, \ldots, x_M) \quad (A1)$$

where $f_0$ is constant and the integrals of every independent function, $f_{ij\ldots k}(x_i, x_j, \ldots, x_k)$ for $1 \le i < j < \ldots < k \le M$ and $k = 1, \ldots, M$, over any of its own variables are equal to zero.

Squaring and integrating the decomposition equation (A1), and by the orthogonality property of the terms, one obtains:

$$D = \sum_{i=1}^{M} D_i + \sum_{1 \le i < j \le M} D_{ij} + \cdots + D_{12\cdots M} \quad (A2)$$

where $D$ is the total variability of $f(x_1, \ldots, x_M)$ and $D_{ij\ldots k}$ are the partial variability computed from each of the terms in the decomposition equation (A1).

The global sensitivity index is the ratio of partial variability to the total variability:

$$S_{ij\cdots k} = \frac{D_{ij\cdots k}}{D} \quad \text{for } 1 \le i < j < \ldots < k \le M .$$

$S_i$, the first-order sensitivity index for factor $x_i$, measures the fractional contribution of $x_i$ to the variability of $f(x_1, \ldots, x_M)$.   $S_{ij}$, for $i \ne j$, is the second-order sensitivity index and measures the interaction effect between $x_i$ and $x_j$ that cannot be

explained by the sum of the individual effects of $x_i$ and $x_j$, and so on. The sum of all terms of the global sensitivity index is 1:

$$\sum_{i=1}^{M} S_i + \sum_{1 \le i < j \le M} S_{ij} + \cdots + S_{12\cdots M} = 1 \quad . \tag{A3}$$

The measure of total individual influence of all controllable variables, including the interaction effects among them, is calculated by partitioning $x$ into $x_{\sim j}$ (all controllable variables excluding $x_j$) and $x_j$. The total effect of $x_j$ to the total output variability is given by

$$TS(j) = 1 - \frac{D_{\sim j}}{D} , \tag{A4}$$

where $D_{\sim j}$ is the sum of variance of all of the $S_{ij\ldots k}$ terms that do not include $x_j$, i.e., the total fractional variance complement to $x_j$.

**Claims**

1. A method to improve the reliability of a product or process, the method comprising:

   optimizing a cumulative distribution function that represents the reliability, by determining optimal mean values for selected one or more critical probabilistic controllable variables of the product or process,

   wherein the selected one or more variables are chosen from all of the critical probabilistic controllable variables of the product or process on the basis of being feasible to control.

2. The method of claim 1, wherein determining the optimal mean values comprises at least:

   varying values of the selected one or more variables while keeping fixed the standard deviation of the selected one or more variables, and determining how varying these values affects parameters of the cumulative distribution function.

3. The method of claim 1 or claim 2, wherein optimizing the cumulative distribution function comprises at least:

   setting an optimization objective for each parameter of the cumulative distribution function subject to constraints on values of the selected one or more variables;
   choosing a function in the parameters; and
   calculating an optimal value for the function.

4. The method of any one of claims 1 to 3, further comprising:

   ranking the influence of all of the probabilistic controllable variables on the reliability in a vicinity of the optimal mean values of the selected one or more variables.

**5.** The method of claim 4, wherein ranking the influence comprises at least:

local probabilistic sensitivity analysis based on root sum of squares techniques.

**6.** The method of claim 4, wherein ranking the influence comprises at least:

tolerance design-based functional analysis of variance (ANOVA) analysis.

**7.** A method to determine the effect of probabilistic design variables of a product or process on the reliability of the product or process, the method comprising:

formulating a cumulative distribution function that represents the reliability in terms of one or more parameters;
analytically deriving the one or more parameters in terms of the probabilistic design variables; and
ranking the influence of the probabilistic design variables on the reliability to identify critical probabilistic controllable variables.

**8.** The method of claim 7, further comprising:

determining which of the critical probabilistic controllable variables it is feasible to control.

**9.** The method of claim 7 or claim 8, further comprising:

determining how the critical probabilistic controllable variables affect the reliability.

**10.** The method of claim 9, wherein determining how the critical probabilistic controllable variables affect the reliability comprises at least:

determining which, if any, of the critical probabilistic controllable variables has a linear relationship to the one or more parameters; and
determining, which, if any, of the critical probabilistic controllable variables interacts with noise variables of the product or process.

**11.** The method of any one of claims 7 to 10, further comprising:

optimizing the cumulative distribution function with respect to one or more of the critical probabilistic controllable variables.

**12.** The method of claim 11, wherein optimizing the cumulative distribution function comprises at least:

setting optimization objectives for the parameters subject to constraints on values of the probabilistic controllable variables.

**13.** A system to improve the reliability of a product or process, the system comprising:

means for optimizing a cumulative distribution function that represents the reliability, the optimizing means being arranged to determine optimal mean values for selected one or more critical probabilistic controllable variables of the product or process, and
means for selecting said one or more variables, said means being arranged to choose said variables from all of the critical probabilistic controllable variables of the product or process on the basis of being feasible to control.

**14.** A system to determine the effect of probabilistic design variables of a product or process on the reliability of the product or process, the system comprising:

means for formulating a cumulative distribution function that represents the reliability in terms of one or more parameters;
means for analytically deriving the one or more parameters in terms of the probabilistic design variables; and
means for ranking the influence of the probabilistic design variables on the reliability to identify critical probabilistic controllable variables.

**EP 1 703 452 A1**

**Amended claims in accordance with Rule 86(2) EPC.**

**1.** A method to improve the reliability of a physical product or a process involving a physical product, the method comprising:

optimizing a cumulative distribution function that represents the reliability and that is formulated in terms of probabilistic design variables of the product or process, by determining optimal mean values for a selected one or more of those of the probabilistic design variables which are critical and controllable, wherein the selected one or more variables are chosen from all of the critical probabilistic controllable variables of the product or process on the basis of being feasible to control.

**2.** The method of claim 1, wherein determining the optimal mean values comprises at least:

varying mean values of the selected one or more variables while keeping fixed the standard deviation of the selected one or more variables, and determining how varying these mean values affects parameters of the cumulative distribution function.

**3.** The method of claim 1 or claim 2, wherein optimizing the cumulative distribution function comprises at least:

setting an optimization objective for each parameter of the cumulative distribution function subject to constraints on values of the selected one or more variables; choosing a function in the parameters; and calculating an optimal value for the function.

**4.** The method of any one of claims 1 to 3, further comprising:

ranking the influence of all of the probabilistic controllable variables on the reliability in a vicinity of the optimal mean values of the selected one or more variables.

**5.** The method of claim 4, wherein ranking the influence comprises at least:

local probabilistic sensitivity analysis based on root sum of squares techniques.

**6.** The method of claim 4, wherein ranking the influence comprises at least:

tolerance design-based functional analysis of variance (ANOVA) analysis.

**7.** The method of any one of claims 4 to 6, further comprising:

determining engineering or manufacturing tolerances for a particular probabilistic controllable variable based at least in part on the influence of the particular probabilistic controllable variable on the reliability in the vicinity of the optimal mean values of the selected one or more variables.

**8.** The method of any one of claims 1 to 7, wherein the product is a packaging product and the reliability of the product is related to thermo-mechanical fatigue of components in the packaging product.

**9.** The method of claim 8, wherein the product is a device comprising a ball grid array component and a printed wiring board component, and the reliability of the product is related to solder fatigue between the components.

**10.** The method of any one of claims 1 to 7, wherein the process involves a trim press machine.

**11.** A method to determine the effect of probabilistic design variables of a product or process on the reliability of the product or process, the method comprising:

formulating a cumulative distribution function that represents the reliability in terms of one or more parameters; analytically deriving the one or more parameters in terms of the probabilistic design variables; and ranking the influence of the probabilistic design variables on the reliability to identify critical probabilistic controllable variables.

17

**12.** The method of claim 11, further comprising:

determining which of the critical probabilistic controllable variables it is feasible to control.

**13.** The method of claim 11 or claim 12, further comprising:

determining how the critical probabilistic controllable variables affect the reliability.

**14.** The method of claim 13, wherein determining how the critical probabilistic controllable variables affect the reliability includes at least:

determining which, if any, of the critical probabilistic controllable variables has a linear relationship to the one or more parameters; and
determining which, if any, of the critical probabilistic controllable variables interacts with noise variables of the product or process.

**15.** The method of any one of claims 11 to 14, further comprising:

optimizing the cumulative distribution function with respect to one or more of the critical probabilistic controllable variables.

**16.** The method of claim 15, wherein optimizing the cumulative distribution function comprises at least:

setting optimization objectives for the parameters subject to constraints on values of the probabilistic controllable variables.

**17.** A system to improve the reliability of a product or process, the system comprising:

means for optimizing a cumulative distribution function that represents the reliability and that is formulated in terms of probabilistic design variables of the product or process, the optimizing means being arranged to determine optimal mean values for a selected one or more of those of the probabilistic design variables which are critical and controllable, and
means for selecting the selected one or more variables, the selecting means being arranged to choose the selected one or more variables from all of the critical probabilistic controllable variables of the product or process on the basis of being feasible to control.

**18.** A system to determine the effect of probabilistic design variables of a product or process on the reliability of the product or process, the system comprising:

means for formulating a cumulative distribution function that represents the reliability in terms of one or more parameters;
means for analytically deriving the one or more parameters in terms of the probabilistic design variables; and
means for ranking the influence of the probabilistic design variables on the reliability to identify critical probabilistic controllable variables.

102
DEFINE PRODUCT/PROCESS TO
BE DESIGNED OR REDESIGNED

128
RANK SENSITIVITY OF DESIGN
VARIABLES IN VICINITY OF
OPTIMAL VALUES

104
MODEL PRODUCT/PROCESS
AS ENGINEERED SYSTEM

106
GENERATE MATHEMATICAL
RELATIONS OF THE OUTPUT
OF THE PRODUCT/PROCESS
FAILURE MECHANISM
TO THE DESIGN VARIABLES

124
RELIABLE DESIGN

108
FORMULATE PRODUCT/PROCESS
RELIABILITY MODEL
USING A CUMULATIVE
DISTRIBUTION FUNCTION (CDF)

126
YES
MAJOR
DEVIATION?
NO

122
RELIABILITY
PREDICTIONS
VALID?
YES

110
ANALYTICALLY DERIVE FORMS
OF CDF PARAMETERS IN TERMS
OF THE DESIGN VARIABLES

120
OPTIMIZE RELIABILITY WITH
RESPECT TO CRITICAL
CONTROLLABLE VARIABLES

112
IDENTIFY CRITICAL DESIGN
VARIABLES HAVING GREATEST
EFFECT ON RELIABILITY

118
DETERMINE EFFECT OF
CRITICAL VARIABLES
ON RELIABILITY:
LINEAR RELATION TO
OUTPUT? INTERACTION WITH
NOISE VARIABLES?

114
FEASIBLE
TO CONTROL CRITICAL
VARIABLES?
YES

NO

116
STOP

FIG. 1

CONTROLLABLE
VARIABLES

204

SIGNAL
VARIABLES

202

PRODUCT OR
PROCESS
200

OUTPUT

208

NOISE / UNCONTROLLABLE
VARIABLES

206

FIG. 2A

$$L, h, \alpha_{PWB}, \alpha_{BGA}$$

$C$

BGA-PWB
SYSTEM
UNDER TEST
250

$$\Delta\gamma, N$$

$\Delta T, \varepsilon,$ and geometric
and material variations of
$$L, h, \alpha_{PWB}, \alpha_{BGA}$$

FIG. 2B

FIG. 3

EP 1 703 452 A1

FIG. 4A

FIG. 4B

FIG. 5A

FIG. 5B

EP 1 703 452 A1

FIG. 6

$h$ (mm)

$\Delta \gamma$

1.40E-02
1.20E-02
1.00E-02
8.00E-03
6.00E-03
4.00E-03
2.00E-03
0.00E+00

0.1  0.3  0.5  0.7  0.9  1.1  1.3  1.5

FIG. 7

FIG. 8A

EP 1 703 452 A1

FIG. 8B

FIG. 8C

FIG. 8D

EP 1 703 452 A1

EP 1 703 452 A1

FIG. 8E

FIG. 9

EP 1 703 452 A1

EP 1 703 452 A1

100,000 TRIALS                                              99,273 DISPLAYED

FIG. 10A

100,000 TRIALS

100,000 DISPLAYED

CUMULATIVE PROBABILITY

CUMULATIVE FREQUENCY

SHEAR STRAIN RANGE

FIG. 10B

EP 1 703 452 A1

100,000 TRIALS                                    100,000 DISPLAYED

CUMULATIVE
PROBABILITY                                       CUMULATIVE
                                                  FREQUENCY

CYCLES TO FAILURE

FIG. 11A

100,000 TRIALS                                                    99,830 DISPLAYED

CUMULATIVE
PROBABILITY

CUMULATIVE
FREQUENCY

CYCLES TO FAILURE

# FIG. 11B

FIG. 12A

CONTRIBUTION

FIG. 12B

European Patent
Office

**DECLARATION**

Application Number

which under Rule 45 of the European Patent Convention EP 05 10 2205
shall be considered, for the purposes of subsequent
proceedings, as the European search report

| The Search Division considers that the present application, does not comply with the provisions of the EPC to such an extent that it is not possible to carry out a meaningful search into the state of the art on the basis of all claims | CLASSIFICATION OF THE APPLICATION (Int.Cl.7) |
|---|---|
| Reason: | G06F17/60 |

The claims relate to subject matter
excluded from patentability under Art.
52(2) and (3) EPC. Given that the claims
are formulated in terms of such subject
matter or merely specify commonplace
features relating to its technological
implementation, the search examiner could
not establish any technical problem which
might potentially have required an
inventive step to overcome. Hence it was
not possible to carry out a meaningful
search into the state of the art (Rule 45
EPC). See also Guidelines Part B Chapter
VIII, 1-3.
A meaningful search is not possible on the
basis of all claims because all claims are
directed to - Mathematical method -
Article 52 (2)(a) EPC

The applicant's attention is drawn to the
fact that a search may be carried out
during examination following a declaration
of no search under Rule 45 EPC, should the
problems which led to the declaration
being issued be overcome (see EPC
Guideline C-VI, 8.5).
-----

| Place of search | Date | Examiner |
|---|---|---|
| Munich | 10 August 2005 | LOPES MARGARIDO, C |

EPO FORM 1504 (P04C37)

## EP 1 703 452 A1

### REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- IEEE Standard Computer Dictionary: A Compilation of IEEE Standard Computer Glossaries. 1990
- **SOBOL, I.M.** Global sensitivity indices for non-linear mathematical models and their Monte Carlo estimates. *Mathematics and Computers in Simulation,* vol. 55, 271-280
- **EVANS, J.W. et al.** Simulation of Fatigue Distributions for Ball Grid Arrays by the Monte Carlo Method. *Microelectronics Reliability,* August 2000, vol. 40 (7), 1147-1155